# EUROPÄISCHE PATENTANMELDUNG

(11) **EP 2 398 064 A1**
(43) Veröffentlichungstag der Anmeldung: **21.12.2011**
(21) Anmeldenummer: 10166214.6
(22) Anmeldetag: 16.06.2010
(51) Int. Cl.: H01L 31/042

(54) **Photovoltaische Freiflächenanlage für die Landwirtschaft**

(71) Anmelder: ET Solutions AG, 80339 München (DE)
(72) Erfinder: Zakhartchenko, Serguei A., 81539 München (DE); Sui, Linhui, 80339 München (DE)
(74) Vertreter: TER MEER - STEINMEISTER & PARTNER GbR

(57) **Zusammenfassung**

Die Erfindung betrifft eine photovoltaische Freiflächenanlage, die eine Nutzung eines darunterliegenden Bodens ermöglicht und gleichzeitig an verschiedene 3-dimensionale Oberflächen eines Grundstücks anpassbar sowie stabil und wetterfest ist und eine schnelle und einfache Montage ermöglicht, wobei die Photovoltaische Freiflächenanlage eine Vielzahl von Photovoltaik-Modulen (330), eine Vielzahl von Masten (10), eine Vielzahl von Längsträgern (20), die jeweils mindestens zwei hintereinander angeordnete Masten (10) miteinander verbinden, und mindestens eine Traverse (30) aufweist, die zwischen zwei einander gegenüberliegenden Längsträgern (20) angebracht ist und mindestens einen Querträger (300) aufweist, an dem mindestens eines der Photovoltaik-Module (330) befestigt ist" wobei die Traverse (30) von mindestens zwei Traversenhalterungen (40) gehalten wird, die jeweils an einem der zwei einander gegenüberliegenden Längsträger (20) befestigt sind, und jede Traversenhalterung (40) mindestens eine Aufnahme (411) umfasst, die jeweils um eine horizontale Achse (412) kippbar ist, und eine Ausrichtung der jeweiligen horizontalen Achse (412) in einer horizontalen Ebene voreinstellbar ist.

## Beschreibung

Die Erfindung betrifft eine insbesondere für die Landwirtschaft geeignete photovoltaische Freiflächenanlage (FFA), im Allgemeinen auch Solarpark genannt. Die derzeitige weltweite Energieversorgung basiert überwiegend auf der Verbrennung fossiler Brennstoffe, insbesondere Kohle, Gas und Öl. Diese fossilen Brennstoffe werden nur noch wenige Jahrzehnte zur Verfügung stehen. Darüber hinaus steigt durch die Verbrennung fossiler Brennstoffe der CO₂-Gehalt der Atmosphäre ständig an und führt zum bekannten Treibhauseffekt mit seiner zusätzlichen Erwärmung der Atmosphäre und einer deutlichen Verschiebung von Klima- und Vegetationszonen mit Auswirkungen für Mensch und Umwelt. Um unsere Zivilisation und die natürlichen Lebensgrundlagen zukünftiger Generation zu sichern, muss ein nachhaltiges Energiesystem Klimaverträglichkeit, Ressourcenschonung, Risikoarmut, Energieversorgungssicherheit und Wirtschaftlichkeit bieten. Die Sonnenenergie erfüllt diese Zukunftsvoraussetzungen und ist die ergiebigste Form der erneuerbaren Energien.

Um allerdings eine ausreichende Menge von Sonnenergie zu erwirtschaften, werden große Flächen benötigt. Die zur Verfügung stehenden Dachflächen bieten nur eine begrenzte Möglichkeit, da nicht alle Dächer zum einen in südlicher Richtung ausgerichtet und zum anderen statisch für die Montage von photovoltaischen Aufdachanlagen geeignet sind. Eine Alternative zu diesen Aufdachanlagen bieten photovoltaische Freiflächenanlagen. Im Allgemeinen werden für photovoltaische Freiflächenanlagen Photovoltaik-Module, z.B. aus kristallinem Silizium, eingesetzt, die die Strahlungsenergie der Sonne emissionsfrei in elektrischen Strom umwandeln. Die Photovoltaik-Module sind auf einer festen Trägerkonstruktion montiert und sind mit dem optimalen für den Jahresenergieertrag und Standort geeigneten Neigungswinkel nach Süden ausgerichtet. Die Umwandlung des von Photovoltaik-Modulen erzeugten Gleichstroms in netzkonformen Wechselstrom erfolgt durch Wechselrichter. Bei einem Ausbau von solchen photovoltaischen Freiflächenanlagen steht allerdings der Flächenverbrauch für die Solarwirtschaft in direkter Konkurrenz zur Landwirtschaft. Außerdem ist der Ausbau von photovoltaischen Freiflächenanlagen auf geeignete Flächen beschränkt, die eine bestimmte Form, Orientierung und Neigung aufweisen müssen. Darüber hinaus können bei photovoltaischen Freiflächenanlagen zu hoch wachsende Pflanzen zu einer Verschattung der unteren Modulreihen und dadurch zur Minderung des gesamten Stromertrags der Freiflächenanlage führen. Solche Freiflächenanlagen benötigen folglich ein hohes Maß an Wartung bzw. eine regelmäßige Mahd. Darüber hinaus existieren in verschiedenen Ländern gesetzliche Regelungen, die Photovoltaikfreiflächenanlagen auf landwirtschaftlichen Nutzflächen verbieten, um dadurch die landwirtschaftliche Nutzfläche zu erhalten, da eine vermehrte Nutzung von landwirtschaftlichen Nutzflächen zur Energiegewinnung mittels Photovoltaik eine Verteuerung der Lebensmittel nach sich ziehen würde.

Es ist daher Aufgabe der vorliegenden Erfindung, eine photovoltaische Freiflächenanlage anzugeben, die eine Nutzung des unter der photovoltaischen Freiflächenanlage liegenden Bodens zulässt, die für eine solarwirtschaftliche Nutzung von Flächen mit beliebiger Grundfläche, Ebenheit und Neigung geeignet ist und die eine erhöhte Effizienz bei der Energieausbeute aufweist.

Diese Aufgabe wird durch die Merkmale des unabhängigen Anspruchs gelöst.

Die Erfindung basiert auf dem Gedanken, eine einfache, kostengünstige und universelle Trägerkonstruktion der photovoltaischen Freiflächenanlage so zu gestalten, dass eine Nutzung des darunter liegenden Bodens nahezu uneingeschränkt möglich ist und die Trägerkonstruktion an verschiedene dreidimensionale Bodenformen anpassbar ist. Es wird somit eine photovoltaische Freiflächenanlage vorgeschlagen, die beispielsweise eine effektive Doppelnutzung sowohl durch Landwirtschaft als auch für Energieerzeugung mittels Photovoltaik zulässt. Alternativ kann die photovoltaische Freiflächenanlage auch als Carport, Bahnhofs- oder Busunterstand oder über Parkplätzen, Marktplätzen, u.ä. aufgestellt werden. Die Masten sind dabei so hoch, dass Nutztiere bzw. Fahrzeuge unter den Traversen laufen bzw. bewegt werden können. Hierfür umfasst eine photovoltaische Freiflächenanlage eine Trägerkonstruktion, an der eine Vielzahl von Photovoltaik-Modulen befestigt sind. Die Trägerkonstruktion weist mehrere Masten auf, wobei jeweils mindestens zwei aufeinander folgende Masten mit mindestens einem Längsträger verbunden sind. Zwischen zwei einander gegenüberliegenden Längsträgern ist mindestens eine Traverse angebracht, die mindestens einen Querträger mit mindestens einem Photovoltaik-Modul aufweist. Diese Traverse kann komplett vorgefertigt sein und somit beim Aufbau ohne großen Aufwand an den Masten und Längsträgern befestigt werden. Zum Aufnehmen der Traverse ist an jedem der zwei einander gegenüberliegenden Längsträger mindestens eine Traversenhalterung befestigt. Die Traversenhalterung kann so gestaltet sein, dass die Traverse in die Traversenhalterung eingesetzt oder hineingeschoben werden kann. Dies vereinfacht und beschleunigt die Montage der photovoltaischen Freiflächenanlage.

In einem Ausführungsbeispiel umfasst jede Traversenhalterung mindestens eine Aufnahme, die um eine horizontale Achse geschwenkt werden kann, wobei eine Ausrichtung der horizontalen Achse in einer horizontalen Ebene voreinstellbar ist. Durch die kippbare Aufnahme der Traversenhalterung kann die Neigung der Traverse und somit ein Winkel γ zwischen der Traverse und dem Mast eingestellt werden, um beispielsweise eine Geländeneigung in Richtung der Traverse bzw. in Ost/West-Richtung auszugleichen. Des Weiteren kann durch die voreinstellbare Ausrichtung der horizontalen Achse der erfindungsgemäßen Traversenhalterung ein Winkel α zwischen der Traverse und dem Längsträger in der horizontalen Ebene angepasst werden, um beispielsweise eine Nord/Süd-Abweichung der Projektionsfläche des Bodens durch eine entsprechende Ausrichtung der horizontalen Achse der Traversenhalterung zu kompensieren. Die Ausrichtung der horizontalen Achse kann fabrikseitig bei der Anfertigung der Traversenhalterung vorgegeben werden. Alternativ kann ein Halterungskopf, an dem die Aufnahme bzw. die Achse angeordnet ist, bezüglich eines Halterungsmasts, an dem die Traversenhalterung am Längsträger befestigt wird, beweglich sein. Beispielsweise kann der Halterungskopf dreh- oder schwenkbar am Halterungsmast befestigt sein, sodass die horizontale Achse der Traversenhalterung beim Aufbau direkt vor Ort ausgerichtet werden kann. Wenn der Halterungskopf beweglich ist, sind vorzugsweise außerdem Feststellmittel vorhanden, um den Halterungskopf in der gewünschten Stellung zu fixieren.

Vorzugsweise sind die Bestandteile der Trägerkonstruktion der photovoltaischen Freiflächenanlage leicht herzustellen und zusammenzubauen. Beispielsweise können ausschließlich oder überwiegend hohle Rohre verwendet werden, insbesondere mit rundem Querschnitt. Des Weiteren können die einzelnen Bestandteile leicht miteinander verbunden werden, z.B. durch Gestaltung der Verbindungen als Splint- oder Steckverbindungen. Auf diese Weise lässt sich eine photovoltaische Freiflächenanlage realisieren, die leicht und schnell auf- und abzubauen ist, wodurch Montagekosten stark reduziert werden können.

In einem Ausführungsbeispiel kann jeder Mast so in einem Bodenanker eingesetzt werden, dass beim Einsetzen die Masthöhe über der Bodenoberfläche einstellbar ist. Dadurch können lokale Bodenunebenheiten, z.B. Mulden ausgeglichen werden. Vorzugsweise sind die Masten im Wesentlichen vertikal oder senkrecht ausgerichtet. Darüber hinaus können die Masten ferner in mindestens zwei parallelen Reihen hintereinander angeordnet sein. Dabei sind vorzugsweise Masten einer Reihe über Längsträger miteinander verbunden. Zwischen den Reihen mit den Masten befinden sich Korridore, die für die landwirtschaftliche Nutzung zur Verfügung stehen.

In einem weiteren Ausführungsbeispiel können einander gegenüberliegende Längsträger im Wesentlichen parallel zueinander verlaufen. Vorzugsweise verlaufen die Längsträger zudem im Wesentlichen horizontal im oberen Bereich der Masten. Des Weiteren kann die Verlaufsrichtung der Längsträger im Wesentlichen der Nord/Süd-Richtung entsprechen. In einem anderen Ausführungsbeispiel können aneinander angrenzende Längsträger an den jeweiligen Masten so angebracht und/oder über eine Verbindungsplatte so verbunden werden, dass eine vertikale Neigung des Längsträgers an äußere Gegebenheiten des Geländes angepasst werden kann. Dadurch kann ein Winkel β zwischen dem Mast und dem Längsträger eingestellt werden. Folglich kann die photovoltaische Freiflächenanlage an eine Geländeneigung in Richtung der Längsträger, z. B. in Nord/Süd-Richtung, angepasst werden. Darüber hinaus sind die Längsträger vorzugsweise im oberen Bereich der Masten angebracht.

In einem Ausführungsbeispiel verläuft die horizontale Achse der Traversenhalterung rechtwinklig zur Längsrichtung der Traverse in der horizontalen Ebene. Ferner kann die Aufnahme der Traversenhalterung ein Hohlrohr umfassen, in das der Querträger der Traverse eingesetzt werden kann. Dadurch wird die Befestigung der Traverse bzw. der Photovoltaik-Module an der Trägerkonstruktion vereinfacht. In einem bevorzugten Ausführungsbeispiel sind die Traversenhalterungen, die denselben Querträger halten, auf derselben in Ost/West-Richtung verlaufenden Hilfslinie auf zwei einander gegenüberliegenden Längsträgern angeordnet. In anderen Worten sind die Traversenhalterungen an den Schnittpunkten einer in Ost/West-Richtung verlaufenden Hilfslinie und mindestens zwei einander gegenüberliegenden Längsträgern angeordnet. Das bedeutet, dass die Traversenhalterungen, die einen Querträger einer Traverse halten, eine Ost/West-Ausrichtung der Traverse erlauben und nicht unbedingt eine kürzeste Verbindung zwischen zwei gegenüberliegenden Längsträgern darstellen. In einem bevorzugten Ausführungsbeispiel, bei dem die Masten in mehr als zwei Reihen hintereinander angeordnet sind, umfasst mindestens eine der Traversenhalterungen zwei Aufnahmen, die in entgegengesetzte Richtungen weisen. Beispielsweise können solche Traversenhalterungen an Längsträgern befestigt sein, die die Masten in den inneren Reihen der photovoltaischen Freiflächenanlage miteinander verbinden. Die Längsträger der inneren Reihen können dann Traversen zu beiden Seiten des jeweiligen Längsträgers stützen. Wenn beispielsweise Masten in mindestens drei Reihen angeordnet sind und die Längsträger, die die Masten der mindestens einen inneren Reihe verbinden, Traversenhalterungen mit zwei Aufnahmen aufweisen, können an diesen Längsträgern zu beiden Seiten Traversen angeordnet sein. Vorzugsweise weist die Traversenhalterung einen Halterungskopf mit einem U-förmigen Profil auf, in dem mindestens eine horizontale Achse angeordnet ist.

In einem weiteren Ausführungsbeispiel umfasst die Traverse mindestens einen oberen und einen unteren Querträger, die in einem bestimmten Abstand zueinander parallel verlaufen und jeweils einen oberen und unteren Bereich des mindestens einen auf der Traverse angebrachten Photovoltaik-Moduls stützen. Insbesondere wird der obere Querträger hierbei von einer langen Traversenhalterung und der untere Querträger von einer kurzen Traversenhalterung gehalten, die auf jeweils gegenüberliegenden Längsträgern befestigt sind. Durch eine Verwendung von mehreren Querträgern pro Traverse kann eine Stabilität der photovoltaischen Freiflächenanlage gestärkt und eine bestimmte Neigung der Modulflächen nach Süden stabilisiert werden, um den Solarertrag zu optimieren.

Um die Trägerkonstruktion der photovoltaischen Freiflächenanlage weiter zu stabilisieren, können außerdem mehrere hintereinander angeordnete Masten durch mindestens zwei Längsträger verbunden sein, die vorzugsweise im Wesentlichen parallel zu einander verlaufen und/oder in unterschiedlichen Höhen an den Masten angebracht sein können. In diesem Ausführungsbeispiel kann die Traversenhalterung dabei an mindestens zwei der Längsträger befestigt sein, die die hintereinander angeordneten Masten verbinden. Dadurch werden die Traversenhalterungen gegen ein Verkippen um den Befestigungspunkt am Längsträger stabilisiert.

Vorzugsweise sind zwei hintereinander angeordnete Masten zusätzlich mit mindestens einer Diagonalstrebe verbunden. Dabei kann die an den hintereinander angeordneten Masten befestigte Diagonalstrebe die photovoltaische Freiflächenanlage weiter stabilisieren. In einem bevorzugten Ausführungsbeispiel weist die Diagonalstrebe an mindestens einem Ende eine Muffe auf, mittels der die Diagonalstrebe am Masten angebracht wird, so dass die Höhe des Befestigungspunkts am Masten angepasst werden kann. Wenn die Diagonalstreben an einem ihrer Enden eine Muffe aufweisen, können die Diagonalstreben im Wesentlichen gleich lang hergestellt werden, obwohl die Masten unterschiedlich hoch im jeweiligen Bodenanker eingesetzt sein können.

In einem weiteren Ausführungsbeispiel kann mindestens ein äußerer Rand der photovoltaischen Freiflächenanlage durch zusätzliche Abspannungen und/oder Abstützungen stabilisiert werden, die z.B. an Masten, Diagonalstreben und/oder Längsträgern an diesem äußeren Rand angreifen.

In einer besonders bevorzugten Ausführungsform wird der mindestens eine Querträger der Traverse durch eine Spannvorrichtung stabilisiert, die eine nach oben gerichtete Kraft zur Kompensation des Gewichts der Traverse liefert. Hierfür kann die Spannvorrichtung beispielsweise mindestens eine Vertikalstrebe, die in einem zentralen Bereich der Traverse angeordnet ist, und mindestens zwei Spannstreben aufweisen, die jeweils an einem der beiden Enden des Querträgers und an der Vertikalstrebe befestigt und so gespannt sind, dass die Spanntreben die Vertikalstrebe gegen die Traverse drücken. Vorzugsweise kann die von der Spannvorrichtung gelieferte Kraft durch Einstellung einer Spannung der Spannstreben angepasst werden. Durch eine solche Spannvorrichtung kann ein Durchhängen der Traverse bzw. der Querträger der Traverse verhindert und eine weitere Stabilisierung bereitgestellt werden.

In einem bevorzugten Ausführungsbeispiel kann die Trägerkonstruktion der photovoltaischen Freiflächenanlage an beliebige Geländeneigungen, Geländeunebenheiten und Geländegrundrisse angepasst werden. Dies wird einerseits durch das Gelenk in der Traversenhalterung und andererseits durch die Möglichkeit die Aufnahme der Traversenhalterung in ihrer Ausrichtung anzupassen. Weiter bieten die Masten eine vertikale Flexibilität. Auch die Längsträger können entsprechen den Geländevorgaben so an den Masten befestigt und aneinander befestigt werden, dass die Trägerkonstruktion an die Geländevorgaben angepasst wird, so dass möglichst wenig Vorarbeit am Gelände erforderlich ist und auch weniger geeignete Flächen für die erfindungsgemäße photovoltaische Freiflächenanlage nutzbar sind.

Vorzugsweise lässt die photovoltaische Freiflächenanlage Spiel für kleine Bewegungen und/oder Schwingungen. Durch diese Flexibilität wird eine gewisse Nachgiebigkeit der Trägerkonstruktion der photovoltaischen Freiflächenanlage gegen witterungsbedingte Kräfte, wie beispielsweise Schneelast, Wind u. ä. gewährleistet.

Des Weiteren kann die photovoltaische Freiflächenanlage von Landswirtschaftsmaschinen unterfahrbar sein oder Nutztiere können darunter laufen. Hierfür können die Traversen in einer Höhe von ca. 2-4m angebracht sein und die Abstände zwischen benachbarten Mastenreihen kann ca. 10m betragen. Alternativ kann die photovoltaische Freiflächenanlage auch dazu ausgerichtet sein, über Tierfarmen, wie Geflügelfarmen, Fischaufzucht oder Rinderweiden angebracht zu werden.

Um eine landwirtschaftliche Nutzung des unter der photovoltaischen Freiflächenanlage liegenden Bodens möglichst wenig einzuschränken, verläuft eine Kabelführung vorzugweise oberirdisch. Beispielsweise können Kabel in/oder an den Längsträgern entlang verlaufen. In einer Ausführungsform ist eine Seite der Längsträger offen, so dass die Kabel an der offenen Seite geführt und durch eine an der offenen Seite der Längsträger anbringbare Kabelabdeckung gegen elektrische und/oder magnetische Felder abgeschirmt werden können. Hierfür können die Längsträger ein C-Profil oder ein U-Profil aufweisen.

Vorzugsweise wird ein Abstand zwischen zwei hintereinander angeordneten Traversen an eine vorgegebene Licht- und/oder Wasserdurchlässigkeit angepasst, die sich aus der Verwendung des darunterliegenden Bodens, z. B. aus den Bedürfnissen der angebauten Pflanzen, als notwendig ergeben. Beispielsweise benötigen Kartoffeln oder Weißkraut eher weniger Licht, während andere Pflanzen eine größere Licht- und/oder Wasserdurchlässigkeit benötigen.

Es ist auch möglich Wege bzw. Straßen unter der erfindungsgemäßen photovoltaischen Freiflächenanlage anzuordnen. Die durch die photovoltaische Freiflächenanlage gegebene teilweise Verschattung ist insbesondere bei Straßen gewünscht.

### Kurze Beschreibung der Figuren

Fig. 1 zeigt eine perspektivische Ansicht einer photovoltaischen Freiflächenanlage.
Fig. 2 zeigt eine schematische Darstellung eines Ausschnitts der photovoltaischen Freiflächenanlage aus Fig. 1.
Fig. 3 zeigt eine detaillierte Frontansicht eines Ausschnitts einer photovoltaischen Freiflächenanlage.
Fig. 4 zeigt eine detaillierte Seitenansicht eines Ausschnitts einer photovoltaischen Freiflächenanlage.
Fig. 5A zeigt eine Draufsicht auf eine Traverse.
Fig. 5B zeigt eine Ansicht einer Traverse von unten.
Fig. 6A zeigt eine perspektivische Ansicht einer Traversenhalterung mit zwei Aufnahmen.
Fig. 6B zeigt verschiedene Ausrichtungen von horizontalen Achsen einer Traversenhalterung.
Fig. 7 zeigt eine vergrößerte Ansicht des Bereichs A aus Fig. 3.
Fig. 8A zeigt eine detaillierte Frontansicht eines zentralen Ausschnitts einer Traverse mit einer Spannvorrichtung.
Fig. 8B zeigt eine detaillierte Seitenansicht einer Traverse mit zwei Spannvorrichtungen.
Fig. 9 zeigt ein Ausführungsbeispiel für eine Kabelführung.
Fig. 10A zeigt eine Anpassung der photovoltaischen Freiflächenanlage in Nord/Süd-Richtung.
Fig. 10B zeigt eine Anpassung der photovoltaischen Freiflächenanlage in Ost/West-Richtung.
Fig. 10C zeigt eine Anpassung der photovoltaischen Freiflächenanlage an eine schiefwinklige Grundfläche des Bodens.

### Ausführliche Beschreibung der Erfindung

In einem besonders bevorzugten Ausführungsbeispiel wird eine photovoltaische Freiflächenanlage angegeben, die eine Nutzung des darunter liegenden Bodens ermöglicht, beispielsweise um landwirtschaftlichen Ackerbau oder Tierzucht (z. B. Geflügel, Rinder, Fische, etc.) zu betreiben. Hierfür muss die Gestaltung der photovoltaischen Freiflächenanlage an die entsprechenden Erfordernisse angepasst werden. Vorzugweise werden daher Photovoltaik-Module in größer Höhe von ca. 3,5 m angebracht. Dies hat zum einen den Vorteil, dass die photovoltaische Freiflächenanlage für Landwirtschaftsmaschinen unterfahrbar ist oder über Tierzuchtfarmen angebracht werden kann. Zum anderen werden die Photovoltaik-Module besser durch Wind gekühlt, so dass eine Ertragssteigerung von bis zu 1 % erzielt werden kann. Darüber hinaus können Photovoltaik-Module in dieser Höhe nicht mehr leicht durch zu hoch wachsende Pflanzen verschattet werden. Bei einer Verschattung der unteren Modulbereiche käme es zur Minderung des gesamten Stromertrags der photovoltaischen Freiflächenanlage. Außerdem können bei der erfindungsgemäßen photovoltaischen Freiflächenanlage Korridore von ca. 10,5 m Breite freigehalten werden, die an den Seiten nur durch Masten begrenzt sind, die die Photovoltaik-Module stützen. Dadurch können auch große bzw. breite Landwirtschaftsmaschinen zur Nutzung des unter der photovoltaischen Freiflächenanlage liegenden Ackerlandes eingesetzt werden. Anders als ein Gewächshaus ist die erfindungsgemäße photovoltaische Freiflächenanlage zudem sowohl für Licht als auch für Regen durchlässig. Um eine benötigte Licht- und/oder Wasserdurchlässigkeit zu gewährleisten, kann ein Abstand zwischen aufeinanderfolgenden Traversen angepasst werden. In Anbetracht des Klimawandels können durch eine gewisse Verschattung des Bodens durch die photovoltaische Freiflächenanlage auch positive Effekte erzielt werden, da die Erde nicht so schnell Feuchtigkeit verliert. Die teilweise Verschattung wirkt einer Versteppung entgegen, die insbesondere in Regionen mit wenig Niederschlag und hohen Temperaturen auftreten kann. Somit kann insbesondere in derartigen Regionen ein erhöhter landwirtschaftlicher Ertrag erzielt werden.

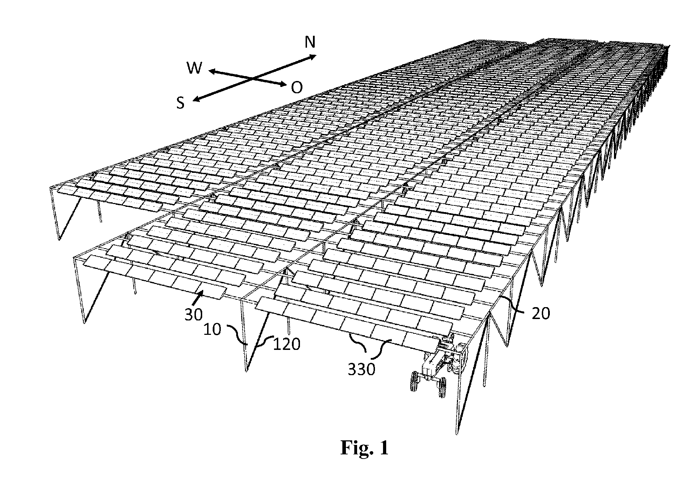

Fig. 1 zeigt ein Ausführungsbeispiel einer photovoltaischen Freiflächenanlage gemäß der vorliegenden Erfindung. Gemäß Fig. 1 werden Korridore, die eine Breite von ca. 10,5 m und eine Höhe von ca. 3,5 m aufweisen können, seitlich durch Masten 10 und Diagonalstreben 120 begrenzt. An mindestens einem der Randbereiche der photovoltaischen Freiflächenanlage können zusätzliche Stabilisierungselemente (Abspannseile) vorhanden sein (nicht gezeigt). An den Masten 10 sind Längsträger 20 befestigt, die eine Vielzahl von Traversen 30 mit Photovoltaik-Modulen 330 stützen. In diesem Ausführungsbeispiel kann landwirtschaftlicher Ackerbau auch mit großen landwirtschaftlichen Maschinen betrieben werden.

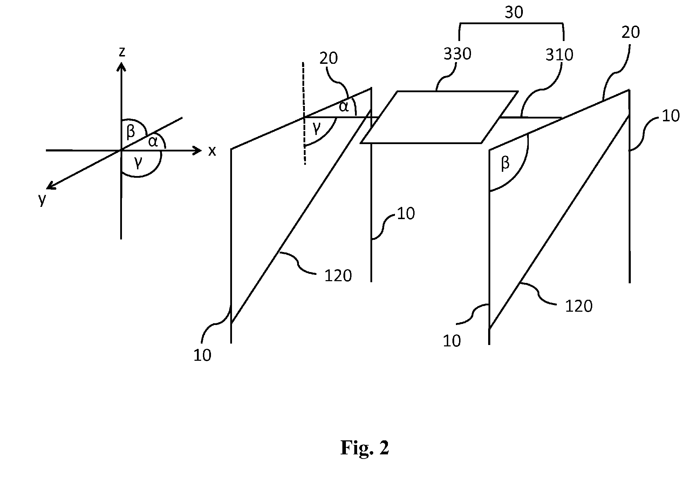

Fig. 2 zeigt einen vergrößerten Ausschnitt der photovoltaischen Freiflächenanlage von Fig. 1. Die Masten 10, die in einer Reihe aufeinander folgen, sind durch mindestens einen Längsträger 20 miteinander verbunden. Hierbei schließt ein Mast und ein dazugehöriger Längsträger 20 einen Winkel β ein, der ungefähr 90° entsprechen kann. Vorzugsweise sind die Masten 10 im Wesentlichen vertikal oder senkrecht ausgerichtet und in mindestens zwei parallelen Reihen hintereinander angeordnet. Folglich verlaufen zwei Längsträger 20, die jeweils hintereinander angeordnete Masten 10 von zwei benachbarten Mastenreihen miteinander verbinden, ebenfalls parallel zueinander. Dadurch bleibt eine Korridorbreite und auch eine Länge der Traversen 30, die die Breite des Korridors überbrücken, in etwa konstant. In einem bevorzugten Ausführungsbeispiel sind die Traversen 30 einschließlich der Verkabelung der Photovoltaik-Module 330 vorgefertigt und können als fertige Elemente eingesetzt werden. Vorzugsweise verlaufen die Längsträger zudem im Wesentlichen horizontal in einer Nord-/Süd-Richtung. Die Längsträger 20 können aber in dem Maße von der horizontalen Ausrichtung abweichen, in dem der darunterliegende Boden in Nord-/Süd-Verlaufsrichtung der Längsträger 20 geneigt ist. In diesem Fall kann ein Abstand zwischen zwei hintereinander angeordneten Traversen 30 so angepasst werden, dass entweder keine gegenseitige Verschattung der Module oder eine über die gesamte photovoltaische Freiflächenanlage gleichmäßige Verschattung auftritt. Das bedeutet, dass ein Abstand zwischen zwei Traversen nicht unbedingt gleichmäßig sein muss. Auch kann die Neigung von hintereinander angeordneten Längsträgern entsprechend der Bodenneigung variieren. Hierbei ist ein Winkel β zwischen dem Mast 10 und dem Längsträger 20 durch die Anbringung des Längsträgers 20 am Mast 10 oder durch eine Verbindungsplatte 230 einstellbar, die aufeinanderfolgende Längsträger 20 miteinander verbindet. Dadurch kann die vertikale Neigung des Längsträgers 20 angepasst werden, um die photovoltaische Freiflächenanlage an eine Geländeneigung entlang des Längsträgers 20 zu adaptieren. Vorzugsweise ist der Längsträger 20 in einem oberen Bereich des Masts 10 angebracht. Außerdem können zwei hintereinander angeordnete Masten 10 auch durch mehrere parallele Längsträger 20 verbunden werden, die in leicht unterschiedlichen Höhen an den Masten 10 angebracht sind. Die an den Längsträgern 20 befestigten Traversen 30 umfassen mindestens einen Querträger 300 und mindestens ein Photovoltaik-Modul 330. Der Querträger 300 bildet mit dem dazugehörigen Längsträger 20 einen Winkel α und bezüglich der Verlaufsrichtung eines dazugehörigen Masts 10 einen Winkel γ. Da die Photovoltaik-Module im Wesentlichen nach Süden ausgerichtet sind, verläuft die Traverse 30 im Wesentlichen in Ost/West-Richtung.

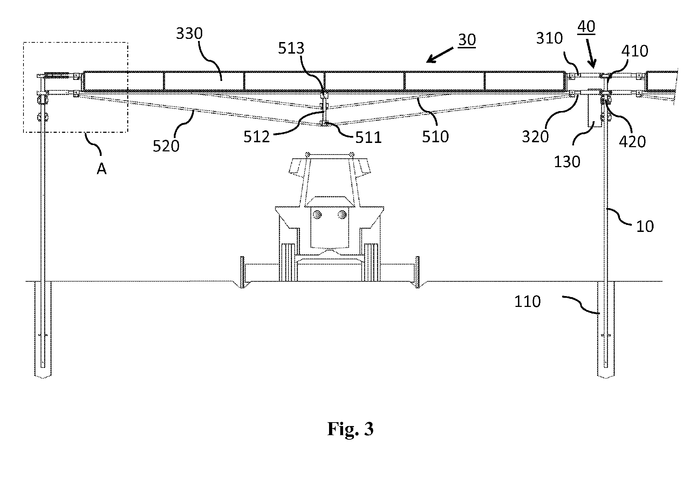

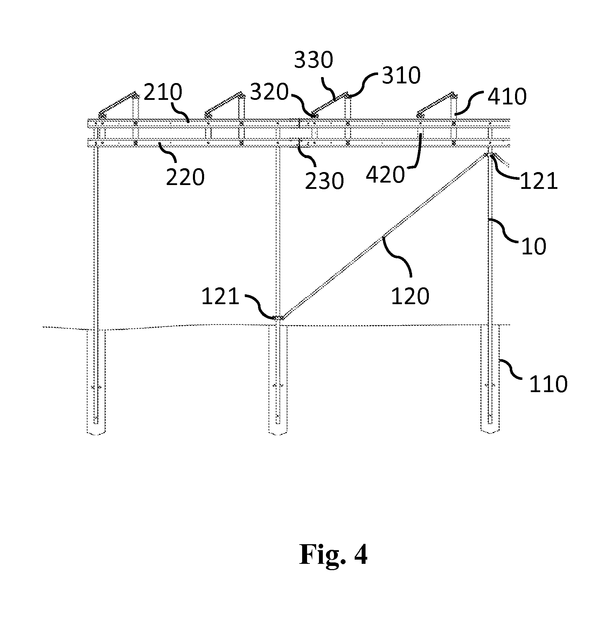

In Fig. 3 ist eine detaillierte Frontansicht des Ausschnitts einer erfindungsgemäßen photovoltaischen Freiflächenanlage gezeigt. Fig. 4 zeigt eine Seitenansicht der photovoltaischen Freiflächenanlage von Fig. 3. Die Masten 10 sind jeweils in einem Bodenanker 110 einsetzbar, so dass die Höhe der Masten 10 über dem Boden angepasst werden kann. Indem der Mast 10 entsprechend tief in den Bodenanker 110 eingesetzt wird, können lokale Bodenunebenheiten, wie Mulden ausgeglichen werden. Der Bodenanker 110 kann ein Punkt-, Beton- oder Schraubenfundament sein oder durch eine Rammtechnik eingesetzt sein. Der am Mast 10 befestigte Längsträger 20 stützt Traversenhalterungen 40, die eine lange Traversenhalterung 410 und/oder eine kurze Traversenhalterung 420 umfassen können. In dem in Figuren 3 und 4 gezeigten Ausführungsbeispiel umfasst die Traverse 30 mehrere Photovoltaik-Module 330, die an zwei Querträgern 310, 320 befestigt sind. In diesem Ausführungsbeispiel umfasst die Traverse 30 einen oberen Querträger 310 und einen unteren Querträger 320. Die zwei Querträger 310 und 320 werden seitlich von jeweils zwei Traversenhalterungen 40 gestützt, wobei der obere Querträger 310 von zwei langen Traversenhalterungen 410 und der untere Querträger 320 von zwei kurzen Traversenhalterungen 420 gestützt wird. Dabei gelten Eigenschaften, die sich auf die Traverse 30 bzw. auf die Traversenhalterung 40 beziehen, gleichermaßen für den oberen bzw. unteren Querträger 310 und 320 bzw. für die lange und die kurze Traversenhalterung 410 und 420. Gemäß Figur 4 kann eine Neigung der Photovoltaik-Module 330 durch den Höhenunterschied zwischen der langen und der kurzen Traversenhalterung 410 und 420 eingestellt werden.

Mindestens einer der Querträger 310, 320 der Traverse 30 wird über seine Länge durch eine Spannvorrichtung 50 stabilisiert. Die Spannvorrichtung 50 umfasst dabei mindestens zwei Spannstreben 510, die von beiden Ende des Querträgers 310, 320 zur Mitte der Traverse 30 führen, wo sie an einer Vertikalstrebe 512 befestigt sind. Durch eine Vorspannung der Spannstreben 510 wird die Vertikalstrebe 512 gegen den Querträger 310, 320 gedrückt, so dass einer Gewichtskraft der Traverse 30 durch die Spannvorrichtung 50 entgegengewirkt wird. Wenn die Traverse 30, wie in dem in Figuren 3 und 4 gezeigten Ausführungsbeispiel, einen oberen und einen unteren Querträger 310 und 320 aufweist, sind vorzugsweise zwei Spannvorrichtungen 50 vorhanden, die jeweils einen der zwei Querträger 310 oder 320 abstützen.

Des Weiteren ist in diesem Ausführungsbeispiel ein Inverter bzw. Wechselrichter 130 entweder in einem oberen Bereich eines Masts 10 oder an einem Längsträger 20 befestigt.

Zwei aufeinanderfolgende Masten 10 können darüber hinaus durch mindestens eine Diagonalstrebe 120 verbunden sein. Die Diagonalstrebe kann an mindestens einem ihrer Enden eine Muffe 121 aufweisen, mittels der sie in verschiedenen Höhen an einem Mast 10 angebracht werden kann. Dies hat den Vorteil, dass die Diagonalstreben 120 immer mit derselben Länge vorgefertigt werden können und trotzdem für verschiedene Abstände und/oder verschiedenen Höhen von aufeinanderfolgenden Masten 10 geeignet sind. In dem in Figuren 3 und 4 gezeigten Ausführungsbeispiel werden Masten 10 einer Reihe außerdem mit zwei parallel verlaufenden Längsträgern 20 verbunden, d.h. einem oberen Längsträger 210 und einem unteren Längsträger 220. Vorzugsweise sind die Traversenhalterungen 410 und 420 an beiden Längsträgern 210 und 220 befestigt, um stärker gegen eine Verkippung um den Befestigungspunkt an einem Längsträger 20 stabilisiert zu werden.

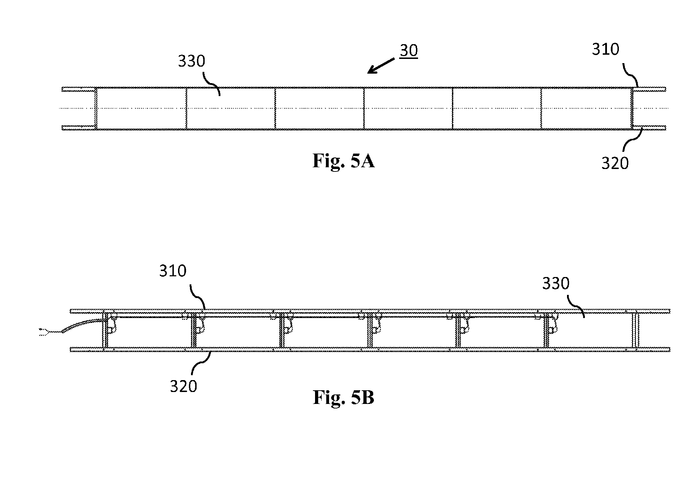

Fig. 5A zeigt eine Draufsicht auf eine Traverse 30 und Fig. 5B zeigt eine Ansicht einer Traverse 30 von unten. Die Traverse 30 umfasst gemäß den Figuren 5A und 5B mehrere Photovoltaik-Module 330 und einen oberen und einen unteren Querträger 310 und 320. Auf der Unterseite der Traverse 30 sind die Photovoltaik-Module 330 elektrisch miteinander verbunden. Der von den Photovoltaik-Modulen 330 erzeugte Strom wird über elektrische Leitungen zu einer Seite der Traverse 30 geführt und dort in ein Kabelnetz der photovoltaischen Freiflächenanlage eingespeist.

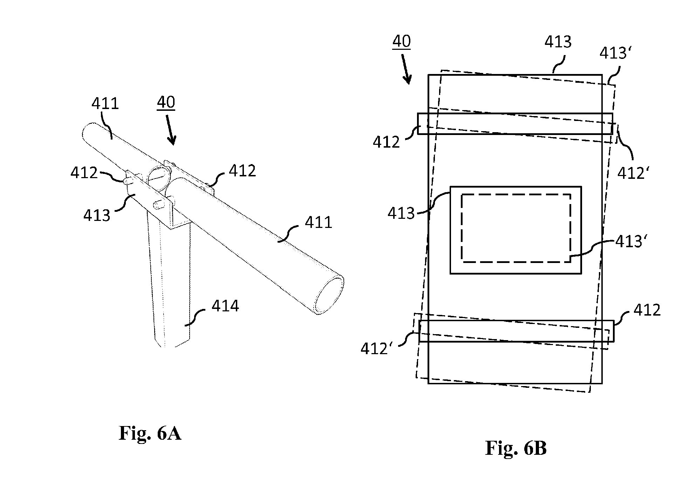

Fig. 6A zeigt eine Traversenhalterung 40, die entweder eine lange oder eine kurze Traversenhalterung 410 oder 420 sein kann. Die Traversenhalterung 40 besteht aus einem Halterungsmast 414, der an mindestens einem Längsträger 20 befestigt wird. An einem Ende des Halterungsmasts 414 befindet sich ein Halterungskopf 413, der vorzugsweise ein U-förmiges Profil aufweist. In dem U-Profil des Halterungskopfs 413 ist mindestens eine Aufnahme 411 angeordnet, die um eine horizontale Achse 412 schwenkbar ist. Die horizontale Achse 412 kann dabei als durchgängiger Splintbolzen mit ein- oder beidseitiger Splintverbindung oder als Gewindebolzen mit ein- oder beidseitiger Fixierung durch Muttern ausgebildet sein. Die horizontale Achse 412 ist vorzugsweise rechtwinklig zur Längsrichtung der Aufnahme 411 angeordnet. Die Aufnahme 411 kann beispielsweise ein Hohlrohr sein, in das ein Querträger 300 eingesetzt werden kann. Die Aufnahme 411 kann allerdings auch U-förmig bzw. an einer Seite offen ausgebildet sein, so dass ein Querträger 300 in die Aufnahme 411 gelegt und mit Befestigungsmitteln befestigt werden kann. Die in Fig. 6A dargestellte Traversenhalterung 40 weist zwei Aufnahmen 411 auf. Vorzugsweise wird eine Traversenhalterung 40, wie sie in Fig. 6A dargestellt ist, an Längsträgern 20 angebracht, die in einer der inneren Reihen der photovoltaischen Freiflächenanlage angeordnet sind. Durch eine Traversenhalterung 40 mit zwei Aufnahmen 411, die in entgegengesetze Richtungen zeigen, können Traversen 30 zu beiden Seiten des die Traversenhalterung 40 tragenden Längsträgers 20 gestützt werden. Durch die um die horizontale Achse 412 kippbare Aufnahme 411 kann ein Winkel γ zwischen der Traverse 30, deren Querträger 300 in der Aufnahme 411 aufgenommen ist, und dem Mast 10, der den dazugehörigen Längsträger 20 trägt, eingestellt werden. Somit kann eine vertikale Neigung der Traverse an eine Geländeneigung in Richtung der Traverse, z. B. einer Ost/West-Richtung angepasst werden. Vorzugweise sind Traversenhalterungen 40, die denselben Querträger 300 halten, in derselben Ost/West-Höhe auf zwei einander gegenüberliegenden Längsträgern 20 angeordnet. Die Abstände zwischen Traversenhalterungen 40 auf einem Längsträger 20 können an die Geländeneigung in Nord/Süd-Richtung und/oder an die Ausdehnung der Photovoltaik-Module 330 angepasst sein, um eine gegenseitige Verschattung der Module 330 zu verhindern oder um eine vorgegebene Licht- bzw. Regendurchlässigkeit zu gewährleisten.

Fig. 6B zeigt eine schematische Ansicht einer Traversenhalterung 40 von oben. Im Allgemeinen können der Halterungsmast 414 und auch die Grundfläche des Halterungskopfs 413 beliebig, insbesondere rechteckig oder rund ausgebildet sein. Vorzugsweise ist der Halterungsmast 414 zentral an der Grundfläche des Halterungskopfs 413 angeordnet, so dass bei einem rechteckigen Halterungsmast die Seiten der Rechtecksformen des Halterungskopfes 413 und des Halterungsmasts 414 parallel zueinander sind. Um aber einen Winkel α zwischen einem Längsträger 20 und einer Traverse 30 einstellen zu können, kann die Ausrichtung der horizontalen Achse 412, um die die Aufnahme 411 gekippt werden kann, in einer horizontalen Ebene vorgegeben werden. Um die Ausrichtung der horizontalen Achse 412 einzustellen, wird vorzugweise die Orientierung des Halterungskopfs 413 bezüglich des Halterungsmasts 414 angepasst. Die gestrichelten Linien in Fig. 6B deuten eine alternative Ausrichtung eines Halterungskopfs 413' bzgl. des Halterungsmasts 414 an, wodurch die Ausrichtung der horizontalen Achsen 412' eingestellt werden können. Die Orientierung des Halterungskopfes 413 bzgl. des Halterungsmasts 414 kann bei Fabrikation vorgegeben werden, da alle Traversenhalterungen an einem Längsträger 20 die gleiche Ausrichtung aufweisen müssen. Alternativ zu einer Orientierungsänderung des Halterungskopfes 413 bezüglich eines Befestigungspunkts des Halterungsmasts 414, an dem die Traversenhalterung 40 an einem Längsträger 20 befestigt werden kann, können auch die Bohrungen im U-Profil des Halterungskopfs 413, durch die die horizontale Achse 412 läuft, leicht in der horizontalen Ebene gegeneinander versetzt sein. Durch die voreinstellbare Ausrichtung der horizontalen Achse 412 kann die photovoltaische Freiflächenanlage an eine beliebige, schiefwinklige Geländegrundfläche angepasst werden. Beispielsweise kann eine Ost/West-Verlaufsrichtung der Traverse 30 trotz einer Abweichung eines Längsträgers von der Nord/Süd-Richtung beibehalten werden. Dies ist für die Sicherstellung einer optimalen Solarenergieausbeute wichtig. Außerdem ist der Aufbau vereinfacht, da die Ausrichtung bereits bei der Herstellung eingestellt bzw. berücksichtigt wurde.

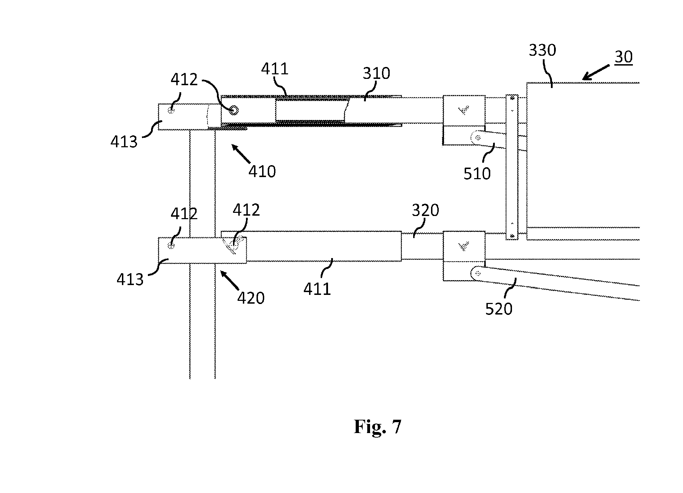

Fig. 7 zeigt eine Vergrößerung des Ausschnitts A aus Fig. 3. In diesem Ausführungsbeispiel weist die Traverse 30 wiederum einen oberen Querträger 310 und einen unteren Querträger 320 auf, die jeweils von einer langen Traversenhalterung 410 und einer kurzen Traversenhalterung 420 gehalten werden. Außerdem ist die Befestigung der Spannstreben 510 der Spannvorrichtung 50 an den Querträgern 310 und 320 gezeigt.

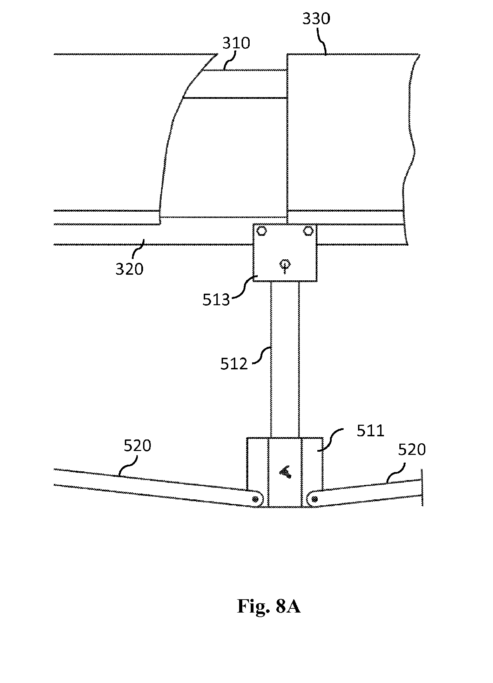

Fig. 8A zeigt einen mittleren Ausschnitt einer Frontansicht einer Traverse 30 mit einer Spannvorrichtung 50. Die Traverse 30 umfasst eine Vielzahl von Photovoltaik-Modulen 330, die in ihren oberen bzw. unteren Bereichen von einem oberen bzw. unteren Querträger 310 bzw. 320 abgestützt werden. Wie in Fig. 8A dargestellt, wird untere Querträger 320 durch eine Spannvorrichtung 50 gestützt, um ein Durchbiegen der Traverse aufgrund ihres Eigengewichts zu verhindern. Die Spannvorrichtung 50 besteht jeweils aus mindestens zwei Spannstreben 510, die von beiden Seiten einer Vertikalstrebe 512 zu den jeweiligen Enden des dazugehörigen Querträgers 310 bzw. 320 verlaufen. Die links und rechtsseitig verlaufenden Spannstreben 510 sind mittels eines zentralen Spannstrebenbefestigungselement 511 im unteren Bereich an der Vertikalstrebe 512 befestigt. Vorzugsweise ist das zentrale Spannstrebenbefestigungselement 511 als Muffe ausgebildet, so dass beim Aufbau der photovoltaischen Freiflächenanlage die an der Muffe 511 befestigten Spannstreben 510 an der Vertikalstrebe 512 entlang nach unten gezogen und dort befestigt werden können. Dadurch werden die Spannstreben 510 gespannt und drücken die Vertikalstrebe 512 gegen ein Vertikalstrebenbefestigungselement 513, mit dem die Vertikalstrebe 512 am Querträger 320 befestigt ist. Folglich ist die Spannung der Spannstreben 510 einstellbar, indem die Spannstreben 510 unterschiedlich stark nach unten gezogen werden. Obwohl Fig. 8A nur eine Spannvorrichtung 50 für den unteren Querträger 320 zeigt, kann zusätzlich oder alternativ eine Spannvorrichtung 50 für den oberen Querträger 310 vorhanden sein. Alternativ kann zusätzlich zu den oberen und unteren Querträgern 310 und 320 auch ein mittlerer oder zentraler Querträger vorhanden sein, wobei dann beispielsweise nur an diesem eine Spannvorrichtung 50 vorgesehen ist.

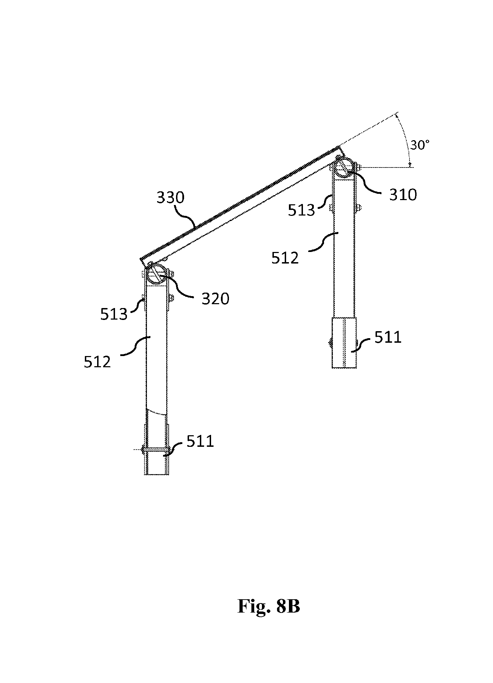

Fig. 8B zeigt eine Seitenansicht einer Traverse 30, die im Gegensatz zu der in Fig. 8A gezeigten Traverse 30 zwei Spannvorrichtungen 50 umfasst. Die in Fig. 8B gezeigte Traverse 30 weist eine Vielzahl von Photovoltaik-Modulen 330, einen oberen Querträger 310, einen unteren Querträger 320 und die zwei Spannvorrichtungen 50 auf, die jeweils den oberen bzw. unteren Querträger 310 bzw. 320 abstützen. Aus Gründen der Übersichtlichkeit sind die Spannstreben 510, die aus der Zeichenebene hinaus bzw. hinein führen würden, nicht dargestellt. Somit ist nur dargestellt, wie die Vertikalstrebe 512 mittels des Vertikalstrebenbefestigungselements 513 am jeweiligen Querträger 310 bzw. 320 angreift. Außerdem ist das zentrale Spannstrebenbefestigungselement 511 am unteren Ende der Vertikalstrebe 512 angedeutet.

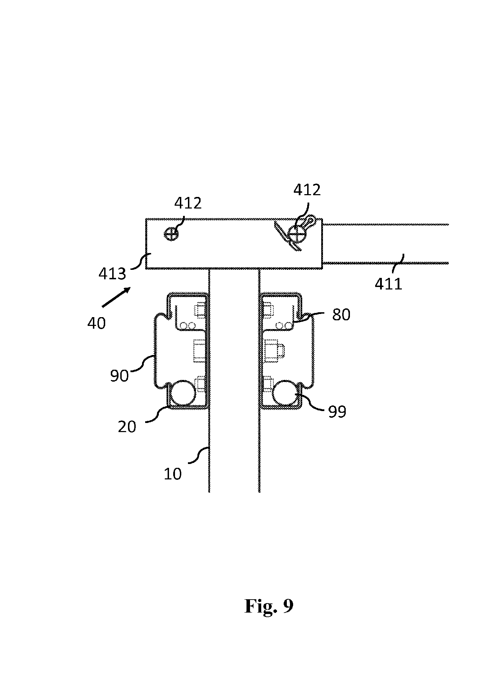

Fig. 9 zeigt ein Ausführungsbeispiel für eine Kabelführung gemäß der Erfindung. Vorzugsweise werden sämtliche Kabel 99 oder zumindest ein Großteil von Kabeln 99 oberirdisch geführt, um eine landwirtschaftliche Bearbeitung des unter der photovoltaischen Freiflächenanlage liegenden Bodens möglichst wenig zu beeinträchtigen. Darüber hinaus erhöht eine oberirdische Kabelführung die Sicherheit, da eine Beschädigung durch arbeitendes Personal oder Technik ausgeschlossen ist. In Fig. 9 ist ein C-förmiger Längsträger 20 gezeigt, in dem ein Kabelhalter 80 angeordnet sein kann. Kabel 99 können entweder vom Kabelhalter 80 oder vom Längsträger 20 gestützt bzw. geführt werden. Zur Abschirmung gegen elektromagnetische Felder kann ferner eine metallische Kabelabdeckung 90 vorhanden sein. In Fig. 9 ist ein Längsträger 20 mit C-förmigem Profil gezeigt, allerdings kann auch ein Längsträger mit U-förmigem Profil oder mit einem Hohlprofil verwendet werden.

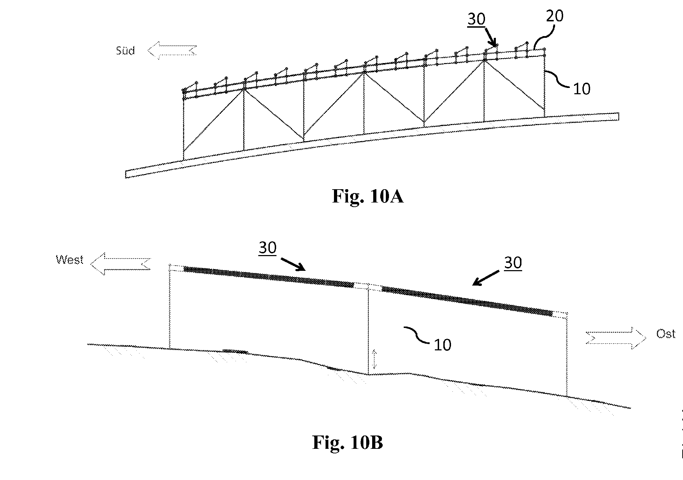

In Figuren 10A-10c soll die Anpassungsfähigkeit der erfindungsgemäßen photovoltaischen Freiflächenanlage verdeutlicht werden. In Fig. 10A ist eine Seitenansicht einer photovoltaischen Freiflächenanlage, von Osten aus betrachtet, dargestellt. Das Gelände in Fig. 10A weist eine Hangneigung gen Süden auf. Diese Geländeneigung verursacht eine Abweichung des Winkels β zwischen einem Längsträger 20 und einem Mast 10 von einem rechten Winkel. Dieser Winkel β zwischen dem Mast 10 und dem Längsträger 20 kann unabhängig von einem benachbarten Längsträger 20 eingestellt werden, der mittels einer Verbindungsplatte 230 mit dem ersten Längsträger 20 verbunden ist. Dadurch soll insbesondere die Ausrichtung der Flächen der Photovoltaik-Module 330 und ihre Neigung gegen Süden für einen optimalen Energieertrag sichergestellt werden.

Fig. 10B zeigt einen Ausgleich einer Geländeneigung in Ost/West-Richtung und von lokalen Geländeunebenheiten. Lokale Geländeunebenheiten werden durch unterschiedlich tiefes Einsetzen eines Masts 10 in den dazugehörigen Bodenanker 110 kompensiert. Darüber hinaus kann der Winkel γ zwischen der Traverse 30 und dem Mast 10 von einem 90° Winkel abweichen, da die den Querträger 300 der Traverse 30 aufnehmende Aufnahme 411 der Traversenhalterung 40 in der Vertikalen geschwenkt werden kann.

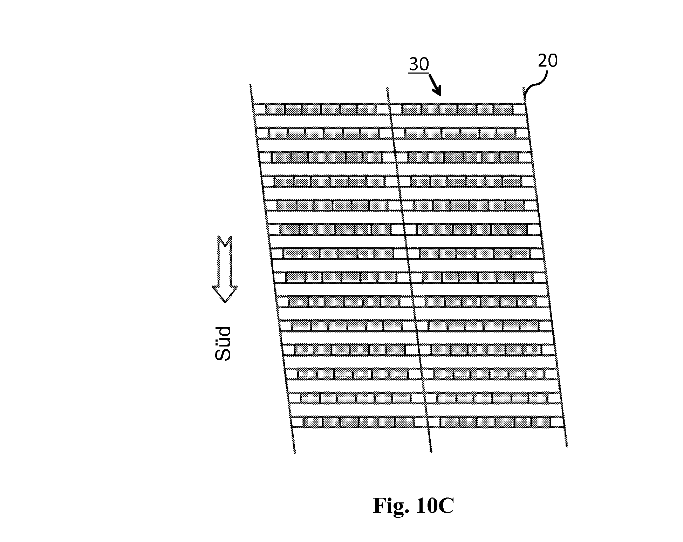

In Fig. 10C ist eine Anpassung der photovoltaischen Freiflächenanlage an einen nichtrechtwinkligen Geländegrundriss veranschaulicht. Die Projektionsfläche eines Feldes oder eines Grundstücks ist im Allgemeinen nicht rechteckig. Daher muss die Trägerkonstruktion für die erfindungsgemäße photovoltaische Freiflächenanlage an eine solche Grundform angepasst werden können. Insbesondere der Winkel α zwischen der Traverse 30 und dem Längsträger 20 kann bei einer Abweichung der Seiten der Projektionsfläche von einer Nord/Süd-Richtung durch eine entsprechende Ausrichtung der horizontalen Gelenkachse 412 der Traversenhalterung 40 angepasst werden. Dadurch kann wiederum eine Ausrichtung der Photovoltaik-Module 330 nach Süden sichergestellt werden.

Vorzugsweise weist eine erfindungsgemäße photovoltaische Freiflächenanlage zusätzlich hoch-effiziente Stringwechselrichter, Einspeisungszähler, eine Ertragsüberwachungseinheit und/oder eine Wetterdatenerfassungseinheit auf. Durch die Verwendung von hocheffizienten Stringwechselrichtern können Energieverluste von Rückströmen, die durch eine ungleichmäßige Verschattung der Module hervorgerufen werden können, minimiert werden. Des Weiteren kann eine Erdungsanlage als Oberflächenerder (Maschennetz) zum Potentialausgleich und ein Blitzschutzsystem installiert sein. Der Durchmesser der für die Trägerkonstruktion der photovoltaischen Freiflächenanlage verwendeten Elemente kann außerdem abhängig von der regionstypischen Schnee- und/oder Windlast gewählt werden. Vorzugsweise besteht die Trägerkonstruktion überwiegend aus verzinkten Stahlrohren. Wo es möglich ist, können Zugelemente der Trägerkonstruktion, die in dieser Beschreibung als Streben, Stangen oder Träger bezeichnet werden, durch Seile oder Ähnliches ersetzt werden.

Die erfindungsgemäße photovoltaische Freiflächenanlage ermöglicht also eine nahezu uneingeschränkte Nutzung des darunterliegenden Bodens. Beispielsweise ist die photovoltaische Freiflächenanlage von Landwirtschaftsmaschinen unterfahrbar oder kann über Tierzuchtfarmen aufgestellt werden. Die Durchlässigkeit der photovoltaischen Freiflächenanlage für Sonnenlicht (direktes oder diffuses Licht) und für Regenwasser kann ferner an die Anforderungen der beabsichtigten Verwendung des darunterliegenden Bodens angepasst werden, sodass eine ertragreiche Nutzung des Bodens sichergestellt werden kann. Durch die Anbringung der Photovoltaik-Module 330 auf einer Höhe von ca. 3,5 m über der Erde wird außerdem eine gute Kühlung der Module durch Wind gewährleistet, was die Effizienz der photovoltaischen Freiflächenanlage steigert. Durch die Verwendung von modulartigen Standardkomponenten, die wo möglich vorzugsweise durch Splintbolzenverbindungen zusammengesetzt werden, können außerdem die Herstellungskosten reduziert und der Auf- bzw. Abbau vereinfacht werden. Obwohl die erfindungsgemäße photovoltaische Freiflächenanlage individuell an die jeweilige Fläche angepasst werden kann, ist daher keine Maßanfertigung von Komponenten nötig. Insgesamt ist die erfindungsgemäße photovoltaische Freiflächenanlage äußerst anpassbar, weist ein möglichst geringes Gewicht auf und ermöglicht eine schnelle und einfache Montage, während sie andererseits langlebig, stabil und wetterfest ist. Durch diese photovoltaische Freiflächenanlage wird eine Versiegelung der Erde minimal gehalten, indem für die Montage nur geringfügige Erdarbeiten ohne Planierung oder Nivellierung nötig sind. Darüber hinaus ist die photovoltaische Freiflächenanlage äußerst flexibel an Geländeneigungen, Geländeunebenheiten und Geländegrundrisse anpassbar. Durch die besondere Anpassungsfähigkeit an die Neigung der Projektfläche und/oder Geländeunebenheiten kann die erfindungsgemäße photovoltaische Freiflächenanlage auch auf Flächen aufgestellt werden, wo andere Gestelle nicht verwendet werden können. Die erfindungsgemäße Trägerkonstruktion der photovoltaischen Freiflächenanlage erlaubt beispielsweise eine Aufstellung auf Flächen mit einer Nord/Süd-Neigung von bis zu 15° und einer Ost/West-Neigung von bis zu 4°.

## Patentansprüche

1. Photovoltaische Freiflächenanlage, die eine Nutzung eines darunterliegenden Bodens ermöglicht, mit einer Vielzahl von Photovoltaik-Modulen (330), umfassend:
- eine Vielzahl von Masten (10);
- eine Vielzahl von Längsträgern (20), die jeweils mindestens zwei hintereinander angeordnete Masten (10) miteinander verbinden; und
- mindestens eine Traverse (30), die zwischen zwei einander gegenüberliegenden Längsträgern (20) angebracht ist und mindestens einen Querträger (310, 320) aufweist, an dem mindestens eines der Photovoltaik-Module (330) befestigt ist, wobei die Traverse (30) von mindestens zwei Traversenhalterungen (40) gehalten wird, die jeweils an einem der zwei einander gegenüberliegenden Längsträger (20) befestigt sind.

2. Photovoltaische Freiflächenanlage nach Anspruch 1, wobei jede Traversenhalterung (40) mindestens eine Aufnahme (411) umfasst, die jeweils um eine horizontale Achse (412) kippbar ist und im Wesentlichen rechtwinklig zur Längsrichtung der Traverse (30) verläuft, und eine Ausrichtung der jeweiligen horizontalen Achse (412) in einer horizontalen Ebene voreinstellbar ist.

3. Photovoltaische Freiflächenanlage nach Anspruch 1 oder 2, wobei die Masten (10) vertikal ausgerichtet sind und/oder jeweils mit einstellbarer Höhe in einen Bodenanker (110) einsetzbar sind.

4. Photovoltaische Freiflächenanlage nach einem der obigen Ansprüche, wobei die Längsträger (20) im Wesentlichen horizontal und/oder im Wesentlichen in Nord/Süd-Richtung verlaufen.

5. Photovoltaische Freiflächenanlage nach einem der obigen Ansprüche, wobei hintereinander angeordnete Längsträger (20) mittels einer Verbindungsplatte (230) so verbindbar sind, dass jeweils ein Winkel β zwischen dem Mast (10) und dem Längsträger (20) einstellbar ist.

6. Photovoltaische Freiflächenanlage nach einem der Ansprüche 2-5, wobei die Aufnahme (411) der Traversenhalterung (40) ein Hohlrohr aufweist, in das der Querträger (300) der Traverse (30) einsetzbar ist.

7. Photovoltaische Freiflächenanlage nach einem der Ansprüche 2-6, wobei mindestens eine der Traversenhalterungen (40) zwei in entgegengesetzte Richtungen weisende Aufnahmen (411) umfasst.

8. Photovoltaische Freiflächenanlage nach einem der obigen Ansprüche, wobei mindestens eine Traversenhalterung (40) einen Halterungskopf (413) mit U-förmigem Profil aufweist und die horizontale Achse (412) in dem U-Profil angeordnet ist.

9. Photovoltaische Freiflächenanlage nach einem der obigen Ansprüche, wobei die Traverse (30) mit mindestens einem Querträger (310, 320) und mindestens einem daran befestigten Photovoltaik-Modul (330) als vorgefertigtes Element in die Traversenhalterungen (40) einsetzbar ist.

10. Photovoltaische Freiflächenanlage nach einem der obigen Ansprüche, wobei die Traverse (30) mindestens zwei Querträger (310, 320) aufweist, die in einem bestimmten Abstand zueinander parallel verlaufen und jeweils verschiedene Bereiche des mindestens einen Photovoltaik-Moduls (330) stützen.

11. Photovoltaische Freiflächenanlage nach einem der obigen Ansprüche, wobei die Traverse (30) einen oberen und einen unteren Querträger (310, 320) aufweist und der obere Querträger (310) von einer langen Traversenhalterung (410) und der untere Querträger (320) von einer kurzen Traversenhalterung (420) gehalten wird.

12. Photovoltaische Freiflächenanlage nach einem der obigen Ansprüche, wobei zwei hintereinander angeordnete Masten (10) zusätzlich mit mindestens einer Diagonalstrebe (120) verbunden sind.

13. Photovoltaische Freiflächenanlage nach einem der obigen Ansprüche, wobei einer der mindestens einen Querträger (300) der Traverse (30) durch eine Spannvorrichtung (50) stabilisiert wird, die eine nach oben gerichtete Kraft zur Kompensation des Gewichts der Traverse (30) liefert.

14. Photovoltaische Freiflächenanlage nach einem der obigen Ansprüche, wobei die Spannvorrichtung (50) mindestens eine Vertikalstrebe (512), die in einem zentralen Bereich der Traverse (30) angeordnet ist, und mindestens zwei Spannstreben (510) aufweist, die jeweils an einem der beiden Enden des Querträgers (300) und an der Vertikalstrebe (512) befestigt und einstellbar so gespannt sind, dass die Spannstreben (510) die Vertikalstrebe (512) gegen die Traverse (30) drücken.

15. Photovoltaische Freiflächenanlage nach einem der obigen Ansprüche, wobei ein Abstand zwischen zwei Traversen (30) an eine vorgegebene Licht- und/oder Wasserdurchlässigkeit angepasst ist und/oder wobei die Photovoltaische Freiflächenanlage von Landwirtschaftsmaschinen unterfahrbar ist.
